# EUROPEAN PATENT APPLICATION

(11) **EP 4 234 331 A1**
(43) Date of publication of application: **30.08.2023**
(21) Application number: 22305224.2
(22) Date of filing: 28.02.2022
(51) Int. Cl.: B60Q 3/80, B60Q 3/74, B60Q 3/14, B60K 35/00

(54) **VEHICLE INTERIOR LIGHTING CONTROL UNIT AND METHOD**

(71) Applicant: TOYOTA JIDOSHA KABUSHIKI KAISHA, Toyota-shi, Aichi-ken, 471-8571 (JP)
(72) Inventor: GENTNER, Alexandre, 1140 BRUSSELS (BE)
(74) Representative: Cabinet Beau de Loménie

(57) **Abstract**

The present invention concerns a method for controlling vehicle interior lighting, wherein a correlated colour temperature (CCT) of lighting in at least a first zone (21, 22, 23) of a vehicle cabin (2) is controlled as a function of a difference (ΔT) between a measured temperature (Tm) and a target temperature (Tt) in said first zone (21, 22, 23) of the vehicle cabin (2). It also concerns a vehicle interior lighting control unit (40) adapted to carry out this method.

## Description

### TECHNICAL FIELD

The disclosure relates to vehicle interior lighting.

### BACKGROUND

With the increased availability of multi-colour light-emitting devices, in particular using clusters of compact light-emitting diodes (LEDs) of various different colours, it has already been proposed, for instance in German patent application publication DE 102010018336 A1, to control the colour of ambient lighting in a vehicle interior in response to various inputs, such as, for instance, a temperature range. However, while this may be useful to communicate information to a vehicle driver or passenger, it does not directly influence driver or passenger comfort.

### SUMMARY

A first object of the disclosure is that of increasing perceived thermal comfort within a vehicle.

For this, a first aspect of the disclosure relates to a method for controlling vehicle interior lighting, wherein a correlated colour temperature of lighting in at least a first zone of a vehicle cabin may be controlled as a function of a difference between a measured temperature and a target temperature in said first zone of the vehicle cabin. Said lighting may include ambient lighting and/or display lighting such as e.g. display background lighting or display accent highlighting.

The correlated colour temperature (CCT) is the temperature of a Planckian radiator whose perceived colour most closely resembles that of a given stimulus at the same brightness and under specified viewing conditions. Correlated colour temperatures higher than 6500 K tend towards blue, whereas correlated colour temperatures lower than 6500 K tend towards red. However, humans perceive low correlated colour temperatures as warmer than high correlated colour temperatures. Through the correlated colour temperature of lighting, it is thus possible to influence the thermal perception of a driver and/or passenger of the vehicle to compensate for the difference between the actual, measured temperature and the preferred, target temperature at least temporarily until the vehicle's climate control reduces or eliminates that difference.

In particular, the correlated colour temperature may be changed with respect to a baseline when an absolute value of the difference between the measured temperature and the target temperature exceeds a first predetermined threshold. More specifically, the correlated colour temperature may be decreased with respect to the baseline when the target temperature exceeds the measured temperature by more than the first predetermined threshold and/or increased with respect to the baseline when the measured temperature exceeds the target temperature by more than the first predetermined threshold. Additionally, the lighting may pulsate concurrently to the change of the correlated colour temperature, so as to further enhance the influence of this change of the correlated thermal temperature in thermal perception.

The correlated colour temperature may be reset to the baseline when the absolute value of the difference between the measured temperature and the target temperature is inferior to a second predetermined threshold that is less than the first predetermined threshold. It is thus possible to induce a hysteresis in the response of the correlated colour temperature so that the correlated colour temperature does not change too frequently when the difference between measured and target temperatures remains close to the first predetermined threshold.

A correlated colour temperature of lighting in a second zone of the vehicle cabin may be separately controlled as a function of a difference between a measured temperature and a target temperature in said second zone of the vehicle temperature. It will thus be possible to adapt the correlated colour temperature of lighting to different zones within the vehicle cabin, such as e.g. a right-hand and a left-hand area and/or a forward and a back area, in particular when a climate control unit of the vehicle allows for separate temperature regulation of those areas.

A second aspect relates to a vehicle interior lighting control unit which may be configured to be connected to at least one variable-colour light-emitting device in at least a first zone of a vehicle cabin and to a climate control unit suitable for measuring and controlling temperature in at least said first zone of the vehicle cabin, and adapted to control a correlated colour temperature of lighting by the at least one variable-colour light-emitting device as a function of a difference between a measured temperature and a target temperature received from the climate control unit.

A third aspect relates to a vehicle interior lighting system which may comprise the vehicle lighting control unit of the second aspect and said at least one variable-colour light-emitting device, connected to the vehicle interior lighting control unit.

A fourth aspect relates to a vehicle which may comprise the vehicle interior lighting system of the third aspect and said climate control unit, connected to the vehicle interior lighting control unit.

A fifth aspect relates to a computer-readable medium comprising instructions which, when executed by a vehicle lighting control unit connected to at least one variable-colour light-emitting device in at least a first zone of a vehicle cabin and to a climate control unit measuring and controlling temperature in at least said first zone of the vehicle cabin, may cause the vehicle lighting control unit to control a correlated control temperature of lighting by the at least one variable-colour light-emitting device as a function of a difference between a measured temperature and a target temperature received from the climate control unit.

The above summary of some example embodiments is not intended to describe each disclosed embodiment or every implementation of the invention. In particular, selected features of any illustrative embodiment within this specification may be incorporated into an additional embodiment unless clearly stated to the contrary.

### BRIEF DESCRIPTION OF THE DRAWINGS

The invention may be more completely understood in consideration of the following detailed description of various embodiments in connection with the accompanying drawings, in which:
- FIG. 1 is a schematic view of a vehicle and its cabin ;
- FIG. 2 is a functional scheme of the interior lighting and heating, ventilation and air conditioning systems of the vehicle of FIG. 1;
- FIG. 3 is a schematic view of an RGB LED cluster of a variable-colour light-emitting device of the vehicle of FIG. 1;
- FIG. 4 is a schematic view of a colour display of the vehicle of FIG. 1; and
- FIG. 5 is a flow chart representing a method of controlling the interior lighting of the vehicle of FIG. 1.

While the invention is amenable to various modifications and alternative forms, specifics thereof have been shown by way of example in the drawings and will be described in detail. It should be understood, however, that the intention is not to limit aspects of the invention to the particular embodiments described. On the contrary, the intention is to cover all modifications, equivalents, and alternatives falling within the scope of the invention.

### DETAILED DESCRIPTION

For the following defined terms, these definitions shall be applied, unless a different definition is given in the claims or elsewhere in this specification.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

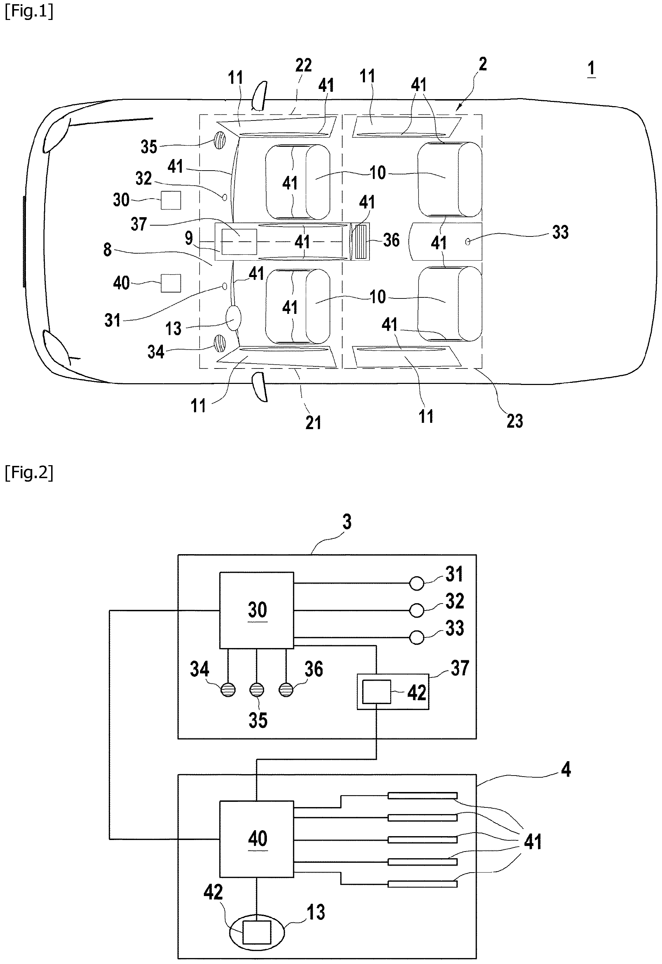

A vehicle 1, and in particular a road vehicle such as a passenger car, may comprise a cabin 2 as illustrated in Fig. 1. As shown also in Fig. 2, the vehicle 1 may comprise a heating, ventilation and air conditioning (HVAC) system 3 configured to separately measure and control at least the temperature in at least three different climate zones within the cabin 2: a forward left-hand zone 21, a forward right-hand zone 22 and a rear zone 23. For this purpose, the HVAC system 3 may comprise a climate control unit 30 which may be connected to temperature sensors 31, 32 and 33 located in each one of the climate zones 21, 22, 23 to separately measure a temperature in each climate zone 21, 22, 23, and configured to separately control an output of the HVAC system 3 for each of the climate zones 21, 22, 23, for instance, separately controlling the flow volume and temperature of air streamed into each climate zone 21, 22, 23 through corresponding vents 34, 35, 36 of the HVAC system 3.

The HVAC system 3 may further comprise a user interface 37 for setting a target temperature for each one of the climate zones 21, 22, 23. This user interface 37 may comprise at least an input element, such as a dial, button or touch-sensitive surface, for inputting a user preference, and an output element, such as a display screen, for indicating the target temperature. As shown in Figs. 1 and 2, the input and output elements may be combined into a single unit, such as a touchscreen. Alternatively or complementarily to this, however, the user interface 37 of the HVAC system 3 may comprise separate input and output elements. The user interface 37 may also be distributed across the cabin 2, to allow users in the different climate zones 21, 22, 23 to set the target temperature for each climate zone 21, 22, 23.

The vehicle 1 may also comprise a vehicle interior lighting system 4 comprising a vehicle interior lighting control unit 40 and light-emitting devices connected to the vehicle interior lighting control unit 40. These light-emitting devices may comprise ambient light-emitting devices 41, which may be distributed across the vehicle cabin 2 and/or integrated into the cabin trim, for instance in the dashboard 8, centre console 9, seats 10, door cards 11, pillars (not shown) and/or headliner (not shown), but also display light-emitting devices 42, forming pixels of displays such as e.g. that of the user interface 37 of the HVAC system 3, or that of an instrument cluster 13 which may display other information, such as e.g. vehicle speed.

Each one of the climate control unit 30 and the vehicle interior lighting control unit 40 may be a computer including a data processor, a memory, and input and output lines. The data processor may be, in particular, an electronic microprocessor, and the memory may include, in particular, a volatile or non-volatile semiconductor memory such as a dynamic random-access memory (DRAM), a static random-access memory (SRAM), a read-only memory (ROM), a programmable read-only memory (PROM) and/or an erasable programmable read-only memory (EPROM). Such a computer may further include a data storage unit, such as a solid-state, magnetic, and/or optical data storage unit, which may at least partially replace the memory, acting as a virtual memory. The computer may in particular be a programmable computer wherein the data processor is adapted to carry out instructions in the form of a computer program stored in the memory and/or data storage unit.

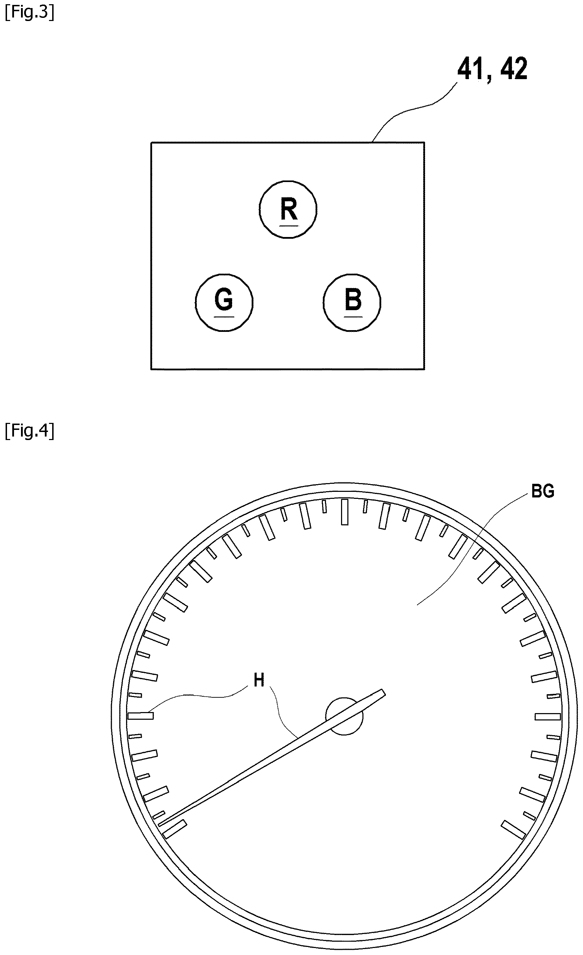

Each light-emitting device of the vehicle interior lighting system 40, including both ambient light-emitting devices 41 and display light-emitting devices 42 of the user interface 37 and/or instrument cluster 13, may in particular comprise light-emitting diodes (LEDs), including organic light-emitting diodes (OLEDs), and may be a variable-colour light-emitting device, configured to vary the colour of emitted light depending on control signals from the vehicle interior lighting control unit 40. For this purpose, each light-emitting device 41, 42 may for instance comprise a cluster of multiple monochromatic light-emitting elements of different colours, wherein each light-emitting element may be a LED. As illustrated in Fig. 3, such a cluster may comprise a red light-emitting element R, a green light-emitting element G, and a blue light-emitting element B. The colour of the lighting by each light-emitting device may thus be controlled by the vehicle interior lighting control unit 6 using for instance RGB signals assigning an intensity to each of these three component colours, red, green and blue, of each individual light-emitting device and/or of an entire array of multiple light-emitting devices.

The vehicle interior lighting control unit 6 may be programmed to control a correlated colour temperature of lighting by each light-emitting device 41, 42 as a function of a difference between a measured temperature and a target temperature received from the climate control unit 30. In particular, when the vehicle cabin 2 comprises multiple climate zones 21, 22, 23, as shown in Fig. 1, the vehicle interior lighting control unit 40 may be programmed to separately control the CCT of lighting by the ambient light-emitting devices 41 located in each climate zone 21, 22, 23 according to a difference between the temperature measured by the climate control unit 3, through the corresponding temperature sensor 31, 32, 33, in the corresponding climate zone 21, 22, 23, and the target temperature set for that corresponding climate zone 21, 22, 23. Additionally or alternatively to this, the vehicle interior lighting control unit 6 mays also be programmed to control the CCT of display lighting by light-emitting devices 42 of the user interface 5 of the HVAC system and/or the instrument cluster 13, and more specifically, for example, the CCT of a display background BG and/or of display highlights H, as shown in Fig. 4, according to a difference between measured temperature and target temperature. The vehicle interior lighting control unit 40 may also be programmed to control the overall intensity of lighting by each light-emitting device 41, 42 so as to eventually pulsate the lighting concurrently to a change in CCT. Such lighting intensity pulsations may be simultaneous across several of the light-emitting devices 41, 42, or staggered so as to produces a wave-like effect.

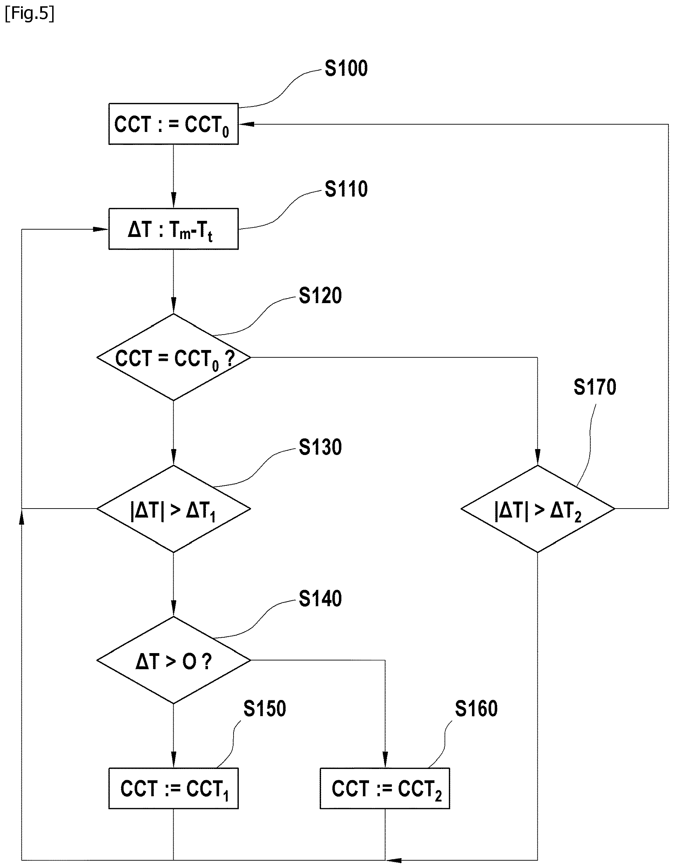

In use, as illustrated in Fig. 5, for each climate zone 21, 22, 23, the vehicle interior lighting control unit 6 may be initialized in step S100 by setting a correlated colour temperature CCT of each lighting device 41, 42 for that climate zone 21, 22, 23 to a baseline value CCT₀, which may be for instance, a neutral CCT of around 6500 K or a different CCT based on a user preference. In step S110 a current temperature Tₘ may then be measured in step S110 by the climate control unit 3, through the corresponding temperature sensor 31, 32 or 33, and compared with a target temperature Tₜ set for the climate zone 21, 22, 23, to obtain a difference ΔT=Tₘ-Tₜ. The climate control unit 30 may then use the difference ΔT in a closed loop control (not shown) of the temperature within that climate zone 21, 22, 23, but also transmit the difference ΔT to the vehicle interior lighting control unit 40. In the next step S120, the vehicle interior lighting control unit 40 may check whether the CCT still has its baseline value CCT₀. If this is the case, the absolute value of the temperature difference ΔT may be compared with a first threshold ΔT₁ in step S130. If the absolute value of the temperature difference ΔT does not exceed the first threshold ΔT₁ the process may loop back to step S110. However, if the absolute value of the temperature difference ΔT exceeds the first threshold ΔT₁, the vehicle interior lighting control unit 40 may then check in step S140 check whether the temperature difference ΔT is positive or negative.

If the temperature difference ΔT is positive, that is, if the measured temperature Tₘ exceeds the target temperature Tₜ by more than the first threshold ΔT₁, the vehicle interior lighting control unit 40 may, in step S150, change the CCT of the ambient light-emitting devices 41 in the corresponding climate zone 21, 22, 23, and/or of corresponding display light-emitting devices 42, from the baseline value CCT₀ to a higher value CCT₁, for instance by increasing the relative intensity of the blue light emitting diode B with respect to that of the red light emitting diode R in each RGB cluster of the corresponding lighting devices 41, 42. In this manner, the ambient and/or display lighting, at least for the relevant climate zone 21, 22, 23, will change to a colour hue that will be perceived as cooler by the user within that climate zone 21, 22, 23, thus at least temporarily alleviating any thermal discomfort from the excess heat. As noted above, the vehicle interior lighting control unit 40 may also pulsate the intensity of lighting concurrently to this change in CCT.

On the other hand, if the temperature difference ΔT is negative, that is, if the target temperature Tₜ exceeds the measured temperature Tₘ by more than the first threshold ΔT₁, the vehicle interior lighting control unit 40 may, in step S160, change the CCT of the ambient light-emitting devices 41 in the corresponding climate zone 21, 22, 23, and/or of corresponding display light-emitting devices 42, from the baseline value CCT₀ to a lower value CCT₁, for instance by increasing the relative intensity of the red light emitting diode R with respect to that of the blue light emitting diode B in each RGB cluster of the corresponding lighting devices 41, 42. In this manner, the ambient and/or display lighting, at least for the relevant climate zone 21, 22, 23, will change to a colour hue that will be perceived as warmer by the user within that climate zone 21, 22, 23, thus at least temporarily alleviating any thermal discomfort from the excess cold. As noted above, the vehicle interior lighting control unit 40 may also pulsate the intensity of lighting concurrently to this change in CCT.

After either step S150 or step S160, the process may loop back to step S110. Going back to step S120, if the CCT no longer has its baseline value CCT₀, the vehicle interior lighting control unit 40 may then, in step S170, compare the absolute value of the temperature difference ΔT to a second threshold ΔT₂ which, in order to obtain a hysteresis, may be lower than the first threshold ΔT₁. If the absolute value of the temperature difference ΔT is not higher than the second threshold ΔT₂, the process may loop back to step S100 to set the CCT back to its baseline value CCT₀. Otherwise, it may loop back to step S110 instead.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. A method for controlling vehicle interior lighting, wherein a correlated colour temperature (CCT) of lighting in at least a first zone (21, 22, 23) of a vehicle cabin (2) is controlled as a function of a difference (ΔT) between a measured temperature (Tₘ) and a target temperature (Tₜ) in said first zone (21, 22, 23) of the vehicle cabin (2).

2. The method of claim 1, wherein said lighting includes ambient lighting.

3. The method of any one of claims 1 and 2, wherein said lighting includes display lighting.

4. The method of any one of claims 1 to 3, wherein the correlated colour temperature (CCT) is changed with respect to a baseline (CCT₀) when an absolute value of the difference (ΔT) between the measured temperature (Tₘ) and the target temperature (Tₜ) exceeds a first predetermined threshold (ΔT₁).

5. The method of claim 4, wherein the correlated colour temperature (CCT) is decreased with respect to the baseline (CCT₀)when the target temperature (Tₜ) exceeds the measured temperature (Tₘ) by more than the first predetermined threshold (ΔT₁).

6. The method of any one of claims 4 and 5, wherein the correlated colour temperature (CCT) is increased with respect to the baseline (CCT₀)when the measured temperature (Tₘ) exceeds the target temperature (Tₜ) by more than the first predetermined threshold (ΔT₁).

7. The method of any one of claims 4 to 6, wherein the lighting pulsates concurrently to the change of the correlated colour temperature (CCT).

8. The method of any one of claims 4 to 6, wherein the correlated colour temperature (CCT) is reset to the baseline (CCT₀)when the absolute value of the difference (ΔT) between the measured temperature (Tₘ) and the target temperature (Tₜ) is inferior to a second predetermined threshold (ΔT₂) that is less than the first predetermined threshold (ΔT₁).

9. The method of any one of claims 1 to 7, wherein a correlated colour temperature (CCT) of lighting in a second zone (21, 22, 23) of the vehicle cabin (2) is separately controlled as a function of a difference (ΔT) between a measured temperature (Tₘ) and a target temperature (Tₜ) in said second zone (21, 22, 23) of the vehicle cabin (2).

10. Vehicle interior lighting control unit (40) configured to be connected to at least one variable-colour light-emitting device (41, 42) in at least a first zone (21, 22, 23) of a vehicle cabin (2) and to a climate control unit (30) suitable for measuring and controlling temperature in at least said first zone (21, 22, 23) of the vehicle cabin (2), and adapted to control a correlated colour temperature (CCT) of lighting by the at least one variable-colour light-emitting device (41, 42) as a function of a difference (ΔT) between a measured temperature (Tₘ) and a target temperature (Tₜ) received from the climate control unit (30).

11. Vehicle interior lighting system (4) comprising the vehicle interior lighting control unit (40) of claim 10 and said at least one variable-colour light-emitting device (41, 42), connected to the vehicle interior lighting control unit (40).

12. Vehicle (1) comprising the vehicle interior lighting system (4) of claim 11 and said climate control unit (30), connected to the vehicle interior lighting control unit (40).

13. A computer-readable medium comprising instructions which, when executed by a vehicle interior lighting control unit (40) connected to at least one variable-colour light-emitting device (41, 42) in at least a first zone (21, 22, 23) of a vehicle cabin (2) and to a climate control unit (30) measuring and controlling temperature in at least said first zone (21, 22, 23) of the vehicle cabin, cause the vehicle interior lighting control unit (40) to control a correlated control temperature (CCT) of lighting by the at least one variable-colour light-emitting device (41, 42) as a function of a difference (ΔT) between a measured temperature (Tₘ) and a target temperature (Tₜ) received from the climate control unit (30).
